# EUROPÄISCHE PATENTSCHRIFT

(11) **EP 3 356 715 B1**
(45) Veröffentlichungstag und Bekanntmachung des Hinweises auf die Patenterteilung: **27.11.2019**
(21) Anmeldenummer: 16775625.3
(22) Anmeldetag: 27.09.2016
(51) Int. Cl.: F16L 5/02, F16L 5/04, H02G 3/22

(54) **LEITUNGSDURCHFÜHRUNG ZUM DURCHFÜHREN VON LEITUNGEN DURCH EIN BAUTEIL**
CONDUIT FEED-THROUGH FOR FEEDING CONDUITS THROUGH A COMPONENT
PASSAGE DE CONDUITE DESTINE A PASSER DES CONDUITES A TRAVERS UN COMPOSANT

(30) Priorität: 29.09.2015 EP 15187318
(43) Veröffentlichungstag der Anmeldung: 08.08.2018
(73) Patentinhaber: Hilti Aktiengesellschaft, 9494 Schaan (LI)
(72) Erfinder: SCHULZ-HANKE, Wolfgang, 86836 Untermeitingen (DE); POPP, Franz, 86807 Buchloe (DE); PAETOW, Matthias, 86916 Kaufering (DE); PAETOW, Mario, 86859 Igling (DE)
(74) Vertreter: Hilti Aktiengesellschaft Corporate Intellectual Property
(86) Internationale Anmeldenummer: PCT/EP2016/072902
(87) Internationale Veröffentlichungsnummer: WO 2017/055237

(56) Entgegenhaltungen:
- EP-A1- 2 131 085
- EP-A1- 2 703 703
- WO-A1-2012/088565
- DE-U1-202009 003 184
- US-A1- 2015 014 943

## Beschreibung

### Technisches Gebiet

Die Erfindung betrifft eine Leitungsdurchführung zum Hindurchführen einer Leitung durch ein Bauteil, insbesondere durch eine Gebäudewand bzw. Gebäudedecke. Insbesondere betrifft die vorliegende Erfindung allgemein Brandschutzmaßnahmen für die Durchführung von Leitungen durch ein Bauteil.

### Technischer Hintergrund

In Gebäuden und Anlagen müssen Leitungen, die durch ein Bauteil, wie z.B. durch eine Wand oder eine Decke, geführt werden, Anforderungen für den Brandschutz genügen. So gehört es zu einer grundlegenden Anforderung, dass Brandgase oder sogar Feuer das Bauteil nicht durchdringen dürfen, d.h. in einem Gebäude nicht von einem Raum in einen nächsten gelangen dürfen.

Aus diesem Grund ist es üblich, bei Leitungsdurchführungen durch Wände der sich zwischen der Leitung und einer Innenwand einer Durchgangsöffnung bestehende Zwischenraum mit einem flexiblen und starren Verfüllmaterial zu verfüllen, wie zum Beispiel mit Mörtel, PU-Steinen, Acrylatdichtmittel, Mineralwolle, insbesondere in Kombination mit Sprühbeschichtungen, und dergleichen.

Im Brandfall können aufgrund einer Hitzentwicklung Spannungen entstehen, die starke mechanische Kräfte zwischen der Wand und der hindurchgeführten Leitung bewirken. Dadurch kann relativer Versatz zwischen der Leitung und der Wand auftreten. Insbesondere kann es auch bei Erdbeben zu erheblichen Verschiebungen zwischen der Leitung und der Wand kommen. Da die Leitung in der Regel mit dem Verfüllmaterial fest verbunden ist, kann sich das Verfüllmaterial durch die auftretenden Spannungen ablösen, reißen oder brechen. Insbesondere eine relative Verschiebung der Leitung senkrecht zur Wand kann zu einem teilweisen oder vollständigen Ablösen des Verfüllmaterials von der Leitung und/oder von der Durchgangsöffnung bzw. zu einem Aufreißen des Verfüllmaterials führen. Durch die dadurch entstehenden Risse und Spalten wird die geforderte Gasundurchlässigkeit beeinträchtigt, so dass Brandgase und Feuer die zuvor gasdichte Durchgangsöffnung überwinden können. Daher ist der bisherige Ansatz des einfachen Verfüllens des Zwischenraums zwischen der Leitung und der Innenwand der Durchgangsöffnung mit einem Verfüllmaterial nicht optimal.

Marktübliche Kabelboxen sehen vor, die Leitung entweder durch eine Kombination aus festem Kunststoff und Abdichtungsmaterial zu führen, wodurch jedoch die relative Beweglichkeit der Leitung erheblich eingeschränkt ist, so dass bei starken Erschütterungen die Beschädigung der Kabelbox nahezu unvermeidlich ist und die Gasdichtigkeit nicht mehr gewährleistet ist.

Weiterhin können intumeszierende Lamellen vorgesehen sein, die zwar eine verbesserte Beweglichkeit der durchgeführten Leitung sicherstellen, aber keine ausreichende Rauchgasdichtigkeit aufweisen.

Ein weiterer Ansatz ist beispielsweise aus der Druckschrift DE 10 2008 000 420 A1 bekannt, in der eine Leitungsdurchführung offenbart ist, die einen geschlossenen Durchführraum für eine Leitung aufweist. Im Gehäuse der Leitungsdurchführung sind eine Einlage aus intumeszierendem Material sowie mindestens ein Dichtelement aus einem elastischen Material vorgesehen, um eine Abdichtung im Brandfall zu erreichen.

Aus der Druckschrift DE 10 2006 000 184 A1 ist eine Leitungsdurchführung zum Durchführen von Leitungen durch ein Bauteil bekannt. Die Leitungsdurchführung weist ein Hüllrohr und ein Basisteil auf, das an dem ersten axialen Ende des Hüllrohres angebracht ist und einen eine Durchführung umgebenden Aufnahmeraum für ein Abschottmittel umfasst. An dem ersten axialen Ende des Hüllrohrs ist weiterhin ein ringförmiges membranartiges Dichtelement angeordnet. An dem zweiten axialen Ende des Hüllrohres ist ein weiteres membranartiges Dichtelement angeordnet, um die Leitungsdurchführung abzudichten.

Die EP 2 703 703 A1 betrifft eine Leitungsdurchführung mit einem Befestigungsring, der an einem Rohr befestigt ist, und einen Träger, der an einer Trennwand um eine Durchgangsöffnung des Rohrs befestigt ist. Eine verformbare ringförmige Dichtungsverbindung ist zwischen dem Befestigungsring und dem Träger angeordnet, wobei ein Haltering das Gelenk gegen den Träger hält. Die Stütze umfasst einen Satz von Halteecken zum Halten der Stütze an der Trennwand. Der Haltering enthält halbkreisförmige Teile, die zu einem Ring zusammengefügt sind. Der Befestigungsring ist konfiguriert, um die ringförmige Verbindung an dem Rohr festzuziehen.

Die US2015/014943 A1 beschreibt ein System zur akustischen Isolierung. Die beschriebenen Vorrichtungen umfassen eine Dichtungsanordnung für eine Leitung, die ein im Wesentlich unflexibles Kragenelement umfasst, das eine axiale Dichtung um die Leitung bildet.

Es ist eine Aufgabe der vorliegenden Erfindung, eine Leitungsdurchführung bereitzustellen, mit der eine Leitung durch ein Bauteil, wie beispielsweise eine Wand oder eine Decke, geführt werden kann, so dass diese für Rauchgase in einem Brandfall dicht ist. Weiterhin soll eine Toleranz gegenüber Erschütterungen und relativen Verschiebungen zwischen der Leitung und dem Bauteil gewährleistet sein, so dass auch nach einer relativen Verschiebung die Dichtigkeit der Leitungsdurchführung nicht beeinträchtigt ist.

### Offenbarung der Erfindung

Diese Aufgabe wird durch die Leitungsdurchführung gemäß Anspruch 1 sowie durch die Leitungsdurchführungsanordnung gemäß dem nebengeordneten Anspruch gelöst.

Weitere Ausgestaltungen sind in den abhängigen Ansprüchen angegeben.

Im Rahmen der vorliegenden Erfindung verwendet, schließen die Singularformen "ein", "eine" und "einer" auch die entsprechenden Pluralformen ein, sofern der Zusammenhang nicht eindeutig auf etwas anderes schließen lässt. Somit soll zum Beispiel der Begriff "ein" "ein oder mehrere" oder "zumindest ein" bedeuten, sofern nicht anders angegeben.

Die Begriffe "aufweisen", "mit" und "haben" sollen einschließend sein und bedeuten, dass auch andere als die genannten Elemente gemeint sein können.

Gemäß einem ersten Aspekt ist eine Leitungsdurchführung zum Durchführen einer Leitung durch ein Bauteil, insbesondere eine Wand oder eine Decke eines Gebäudes, vorgesehen. Die Leitungsdurchführung umfasst:
- ein erstes inneres Lamellenelement mit einem hohlzylindrischen ersten Basisteil zur Aufnahme der Leitung in einer Leitungsöffnung und mit ersten umlaufenden Lamellen, die sich quer zu einer axialen Richtung des ersten Basisteils nach außen erstrecken;
- ein zweites äußeres Lamellenelement mit einem hohlzylindrischen zweiten Basisteil zum Anordnen in einer Durchgangsöffnung des Bauteils und mit zweiten umlaufenden Lamellen, die sich quer zu einer axialen Richtung des zweiten Basisteils nach innen erstrecken,
wobei die ersten und zweiten Lamellen kammartig ineinandergreifen, so dass die Seitenflächen der Lamellen gasundurchlässig und gleitfähig aneinander anliegen.

Eine Idee der obigen Leitungsdurchführungen besteht in der Kombination von einem ersten Lamellenelement und einem zweiten Lamellenelement, wobei das erste Lamellenelement erste Lamellen aufweist, die ringförmig von einem ersten Basisteil nach außen abstehen und das zweite Lamellenelement zweite Lamellen aufweist, die ringförmig von einem zweiten Basisteil nach innen abstehen. Die einfachste Kombination von einem ersten Lamellenelement und einem zweiten Lamellenelement besteht darin, dass das erste Lamellenelement zumindest eine Lamelle aufweist, die ringförmig von einem ersten Basisteil nach außen absteht und das zweite Lamellenelement eine Lamelle aufweist, die ringförmig von einem zweiten Basisteil nach innen absteht. Durch eine Leitungsöffnung des ersten Basisteils kann eine Leitung geführt werden, die durch eine Durchgangsöffnung in dem Bauteil geführt ist. Die Lamellenelemente greifen kammartig ineinander und können so in die Durchgangsöffnung des Bauteils eingesetzt werden. Die ersten und die zweiten Lamellen der Lamellenelemente überlappen sich dabei, so dass eine Gasdichtigkeit entlang der Erstreckungsrichtung der Leitungsöffnung bzw. durch die Durchgangsöffnung erreicht wird.

Im eingesetzten Zustand kann eine Bewegung einer hindurchgeführten Leitung senkrecht zur axialen Richtung der Leitungsöffnung bzw. in Flächenrichtung des Querschnitts der Durchgangsöffnung durch Verschieben der Lamellen ineinander aufgenommen werden Ein Versatz der Leitung in axialer Richtung der Leitungsöffnung kann durch das erste Lamellenelement oder durch ein Gleiten der Leitung in dem ersten Basisteil des ersten Lamellenelements aufgenommen werden. Durch die Kombination der Lamellenelemente ist gewährleistet, dass sich die Leitung in eine Richtung relativ zum Bauteil bewegen kann, ohne eine Gasdurchlässigkeit durch die Durchgangsöffnung hervorzurufen.

Weiterhin können die ersten und/oder die zweiten Lamellen einen vorzugsweise rechteckigen Querschnitt aufweisen und insbesondere flächenparallel zueinander angeordnet sein.

Es kann vorgesehen sein, dass das erste Basisteil und/oder die ersten Lamellen und/oder die zweiten Lamellen mit intumeszierendem Material ausgebildet sind.

Weiterhin können zumindest die ersten und die zweiten Lamellen aus einem flexiblen bzw. elastischen Material ausgebildet sein. Dadurch kann eine Zugbelastung auf das erste Lamellenelement flexibel aufgenommen werden, so dass u.U. die Lamellen nacheinander außer Eingriff gelangen können, wobei jedoch eine Gasdichtigkeit gewährleistet ist, bis die letzte der Lamellen außer Eingriff zwischen zwei der jeweils anderen Lamellen gelangt.

Gemäß einer Ausführungsform können die ersten und die zweiten Lamellen jeweils Längen aufweisen, so dass diese in keinem Bereich außer Eingriff gelangen, wenn aufgrund einer Verschiebung des ersten Basisteils quer zur axialen Erstreckungsrichtung der Leitungsöffnung die ersten Lamellen an das zweite Basisteil anstoßen oder die zweiten Lamellen an das erste Basisteil anstoßen.

Insbesondere können bei kreisförmigen Querschnitten des ersten und des zweiten Basisteils die Längen der ersten und der zweiten Lamellen jeweils über 50% des Abstands zwischen dem ersten und zweiten Basisteil betragen.

Weiterhin können die ersten und die zweiten Lamellen jeweils Längen aufweisen, so dass diese sich in jeder möglichen Richtung quer zur axialen Richtung des Basisteils mindestens mit einer Länge überlappen, die größer ist als der kleinere Abstand aus dem minimalen Abstand zwischen einem Ende der ersten Lamellen und dem zweiten Basisteil und dem minimalen Abstand zwischen einem Ende der zweiten Lamellen und dem ersten Basisteil.

Weiterhin kann die Leitungsöffnung an ihrer inneren Mantelfläche mit einer Gleiteinrichtung versehen sein, so dass die Leitung durch die Leitungsöffnung gleitend und gasdicht geführt ist. Dadurch kann eine Zugentlastung auf das erste Lamellenelement realisiert werden.

Insbesondere kann die Gleitreinrichtung eine Gleitfilmwicklung und/oder ein Gleitmittel aufweisen, das gegebenenfalls mit mindestens einem Brandschutzadditiv versetzt ist und/oder brandschutzrelevant modifiziert wurde.

Alternativ kann die Leitung in der Leitungsöffnung fixiert sein, so dass die Leitung fest mit dem ersten Basisteil verbunden ist.

Gemäß einer Ausführungsform können das erste und/oder das zweite Lamellenelement vollständig entlang der axialen Richtung der Leitungsöffnung geschlitzt sein.

Weiterhin können das erste und/oder das zweite Lamellenelement auch die Form einer Halbschale aufweisen oder aus mehreren Abschnitten bestehen, die so in die Durchgangsöffnung des Bauteils eingesetzt werden können. Dies erleichtert die Montierbarkeit der Leitungsdurchführung.

Gemäß einem weiteren Aspekt ist eine Leitungsdurchführungsanordnung vorgesehen, umfassend ein Bauteil mit einer Durchgangsöffnung und die obige Leitungsdurchführung, wobei das zweite Basisteil in der Durchgangsöffnung fixiert ist.

### Kurzbeschreibung der Zeichnungen

Ausführungsformen werden nachfolgend anhand der beigefügten Zeichnungen näher erläutert. Es zeigen:
- Fig. 1: eine perspektivische Darstellung eines Abschnitts einer Wand mit einer Leitungsdurchführung für eine Leitung; und
- Fig. 2: eine Querschnittsdarstellung durch die Durchgangsöffnung durch die Wand mit der eingesetzten Leitungsdurchführung.

### Beschreibung von Ausführungsformen

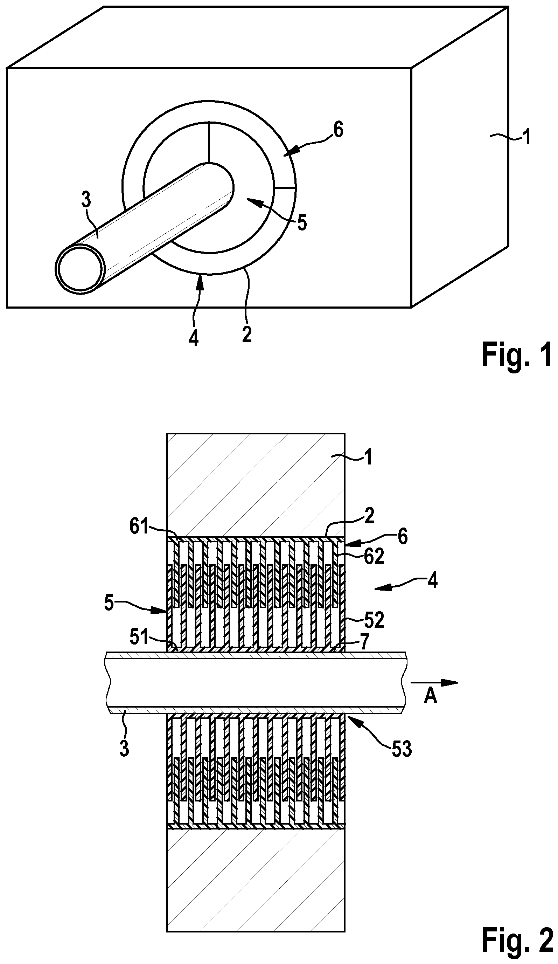

In Figur 1 ist ein Abschnitt einer Wand 1 (oder eines sonstigen Bauteils) mit einer durch die Breite der Wand 1 durchgehenden Durchgangsöffnung 2 dargestellt. Durch die Durchgangsöffnung 2 ist eine Leitung 3 geführt. Die Leitung 3 kann ein Kabel, ein Kabelrohr, eine Rohrleitung, eine Kabeltrasse, ein Lüftungsrohr, eine Lüftungsklappe, oder vergleichbares sein.

Es ist eine Leitungsdurchführung 4 vorgesehen, die zwischen der Leitung 3 und der Innenwand der Durchgangsöffnung 2 angeordnet ist, um zum einen eine flexible Bewegung der Leitung 3 in alle Raumrichtungen relativ zur Durchgangsöffnung 2 zu ermöglichen. Gleichzeitig soll die Gasdichtigkeit im Brandfall gewährleistet sein, auch wenn beispielsweise durch ein vorausgehendes Erdbeben oder eine sonstige Erschütterung ein relativer Versatz der Leitung 3 bezüglich der Durchgangsöffnung 2 aufgetreten ist.

Wie in Verbindung mit der Querschnittsdarstellung der Figur 2 ersichtlich weist die Leitungsdurchführung 4 ein erstes inneres Lamellenelement 5 und ein zweites äußeres Lamellenelement 6 auf.

Das erste Lamellenelement 5 weist ein erstes im Wesentlichen hohlzylindrisches Basisteil 51 auf, das eine durchgehende Leitungsöffnung 53 zum Aufnehmen der Leitung 3 umfasst. D.h. das erste Lamellenelement 5 ist um den Abschnitt der Leitung 3 angeordnet, der sich in der Durchgangsöffnung 2 befindet. Das erste Basisteil 51 kann fest mit der Leitung verbunden sein, z.B. durch Kleben, so dass eine Bewegung der Leitung 3 auch von dem ersten Basisteil 51 des ersten Lamellenelements 5 ausgeführt wird.

Alternativ kann das erste Basisteil 51 die Leitung 3 gleitend führen und dazu z.B. auch eine Hülse 7 aufweisen, die sich gleitend entlang der Mantelfläche der Leitung 3 bewegen kann.

Weiterhin kann zwischen der Mantelfläche der Leitung 3 und der Innenfläche des ersten Basisteils 51 eine Gleiteinrichtung vorgesehen sein, die in anderer Weise ausgebildet ist. Die Gleitfähigkeit zwischen kann durch eine Gleiteinrichtung in Form einer Beschichtung mit einem gleitfähigen Material, wie einem pastösen Gleitstoff, z.B. Schmierstoff oder Gel, oder einem feste Gleitmaterial, wie z.B. Gleitband oder PTFE, erreicht werden.

Von dem ersten Basisteil 51 stehen eine oder mehrere umlaufende erste Lamellen 52 radial nach außen ab. Im Wesentlichen sind dadurch die ersten Lamellen 52 flächenparallel zueinander angeordnet. Die ersten Lamellen 52 haben vorzugsweise einen rechteckigen Querschnitt.

Das zweite Lamellenelement 6 weist ein zweites Basisteil 61 auf. Das zweite Basisteil 61 ist ebenfalls hohlzylindrisch ausgebildet und weist eine Querschnittskontur auf, die der Querschnittskontur der Durchgangsöffnung 2, in die die Leitungsdurchführung 4 eingesetzt ist, so entspricht, dass das zweite Basisteil 61 fest in der Durchgangsöffnung 2 angeordnet werden kann und zwischen der Innenwand der Durchgangsöffnung 2 und der äußeren Mantelfläche des zweiten Basisteils 61 keine Gasdurchlässigkeit besteht. Neben der gezeigten runden Querschnittskontur der Durchgangsöffnung 2 können auch andere Querschnittskonturen wie rechteckige, ovale oder polygonale Querschnittskonturen vorgesehen sein.

Von dem zweiten Basisteil 61 stehen zweite Lamellen 62 nach innen senkrecht zur axialen Richtung der Durchgangsöffnung 2 ab. Die zweiten Lamellen 62 erstrecken sich umlaufend um das erste Lamellenelement 5. Im Wesentlichen sind dadurch die zweiten Lamellen 62 flächenparallel zueinander angeordnet. Die zweiten Lamellen 62 haben vorzugsweise ebenfalls einen rechteckigen Querschnitt.

Die Lamellenelemente 5, 6, aber zumindest die Lamellen 52, 62 können aus einem flexiblen bzw. elastischen Material ausgebildet sein, wie z.B. einem Schaummaterial, einem Kunststoffmaterial, wie z.B. Polyacryl, Silicon, Polyurethan, oder dergleichen ausgebildet sein.

Das erste Basisteil 51 und/oder die ersten Lamellen 52 und/oder die zweiten Lamellen 62 können weiterhin ein intumeszierendes Material enthalten, das sich bei Hitzeeinwirkung so ausdehnt, dass im Brandfall ein vollständiges Verschließen der Durchgangsöffnung 2 erreicht wird und gegebenenfalls z. B. ein mögliches Rohr zusammendrückt.

Die Lamellen des ersten und des zweiten Lamellenelements 5, 6 können kammartig ineinander greifen, so dass sich die ersten und zweiten Lamellen 52, 62 in einer Richtung quer zur axialen Richtung A, d.h. der Erstreckungsrichtung der Leitungsöffnung 53, überlappen.

Die Breite der ersten Lamellen 52 in axialer Richtung A kann der Breite des Abstands der zweiten Lamellen 62 und die Breite der zweiten Lamellen 52 in axialer Richtung kann der Breite des Abstands der ersten Lamellen 52 im Wesentlichen entsprechen oder daran angepasst sein. Dadurch sind die Abstände der Lamellen 52, 62 und deren Breiten aufeinander abgestimmt und eine Beweglichkeit bei gleichzeitiger Gasdichtigkeit zu gewährleisten. Somit können das erste und zweite Lamellenelement 5, 6 so miteinander verbunden werden, dass die ersten Lamellen 52 des ersten Lamellenelements 5 in die Zwischenräume zwischen den zweiten Lamellen 62 des zweiten Lamellenelements 6 hineinragen. Dabei liegen Abschnitte der Seitenflächen der Lamellen 52, 62 gleitend aneinander an, so dass eine Bewegung der Lamellen 52, 62 relativ zueinander, insbesondere in Richtung quer zur axialen Erstreckungsrichtung der Leitung 3 ermöglicht ist.

Bewegt sich nun die Leitung 3 in Richtung einer Flächenrichtung der Querschnittsfläche der Durchgangsöffnung 2 bzw. quer zur axialen Erstreckungsrichtung der Leitung 3, so führt dies zu einer Verschiebung der Seitenflächen der Lamellen 52, 62 gegeneinander. Dadurch, dass dabei die Seitenflächen der Lamellen 52, 62 über den gesamten Umfang nicht außer Eingriff gelangen und selbst nach der Verschiebung aneinander anliegen, wird eine Gasdichtigkeit durch die Durchgangsöffnung 2 nicht durch die Verschiebung quer zur axialen Erstreckungsrichtung A der Leitung 3 beeinträchtigt.

Die Längen der ersten und zweiten Lamellen 52, 62 in Richtung quer zur Erstreckungsrichtung der Leitung 3 sind deutlich geringer als der Abstand zwischen der Leitung 3 bzw. des daran anliegenden ersten Basisteils 51 und der Innenfläche der Durchgangsöffnung 2 bzw. des daran anliegenden zweiten Basisteils 61. Die Längen der ersten und zweiten Lamellen 52, 62 in Richtung quer zur Erstreckungsrichtung der Leitung 3 sind vorzugsweise so gewählt, dass sich diese beim Einsetzen der Leitungsdurchführung 4 in jeder möglichen Richtung quer zur Erstreckungsrichtung der Leitung 3 mit einer vorbestimmten Länge überlappen. Dadurch ist eine Bewegung quer zur Leitung 3 möglich, ohne dass sich eine Gasundichtigkeit ergibt.

Vorzugsweise ist vorgesehen, dass die ersten oder zweiten Lamellen 52, 62 an dem ersten Basisteil 51 bzw. zweiten Basisteil 61 anstoßen und eine weitere relative Bewegung der Leitung 3 verhindern, bevor gegenüberliegende Abschnitte der ersten und zweiten Lamellen 52, 62 außer Eingriff zueinander gelangen und eine Gasundichtigkeit entsteht. Dies wird beispielsweise bei einem runden Querschnitt der Durchgangsöffnung 2 bei einer Länge der ersten Lamellen 52 und der zweiten Lamellen 62 von über 50% des Abstands zwischen dem ersten Basisteil 51 und dem zweiten Basisteil 61 erreicht.

Im Fall das das erste Basisteil 51 fest mit der Leitung 3 verbunden ist, kann eine relative Bewegung der Leitung in axialer Erstreckungsrichtung der Leitung 3 bzw. senkrecht zur Flächenrichtung der Querschnittsfläche der Durchgangsöffnung 2 zunächst durch ein Verbiegen der Lamellen 52, 62 aufgenommen werden kann, ohne dass dies die Gasdichtigkeit beeinträchtigt. Bei einem weiteren Verschieben der Leitung 3 in ihrer Erstreckungsrichtung können die Lamellen 52, 62 nacheinander außer Eingriff gelangen, wobei die Gasdichtigkeit gewährleistet bleibt, solange mindestens eine erste bzw. zweite Lamelle 52, 62 zwischen zwei der zweiten bzw. ersten Lamellen 62, 52 aufgenommen bleibt.

Für die Montage können das erste und das zweite Lamellenelement vollständig entlang der axialen Richtung der Leitungsöffnung geschlitzt sein.

## Patentansprüche

1. Leitungsdurchführung zum Durchführen einer Leitung (3) durch ein Bauteil (1), insbesondere eine Wand oder eine Decke eines Gebäudes, umfassend:
- ein erstes Lamellenelement (5) mit einem hohlzylindrischen ersten Basisteil (51) zur Aufnahme der Leitung (3) in einer durchgehenden Leitungsöffnung (53) und mit ersten umlaufenden Lamellen (52), die sich quer zu einer axialen Richtung des ersten Basisteils (51) nach außen erstrecken;
- ein zweites Lamellenelement (6) mit einem hohlzylindrischen zweiten Basisteil (61) zum Anordnen in einer Durchgangsöffnung des Bauteils (1) und mit zweiten umlaufenden Lamellen (62), die sich quer zu einer axialen Richtung (A) der Leitungsöffnung (53) nach innen erstrecken,
wobei die ersten und zweiten Lamellen (52, 62) kammartig ineinandergreifen, so dass die Seitenflächen der Lamellen (52, 62) gasundurchlässig und gleitfähig aneinander anliegen.

2. Leitungsdurchführung nach Anspruch 1, wobei die ersten und/oder die zweiten Lamellen (52, 62) einen rechteckigen Querschnitt aufweisen und insbesondere flächenparallel zueinander angeordnet sind.

3. Leitungsdurchführung nach einem der Ansprüche 1 bis 2, wobei das erste Basisteil (51) und/oder die ersten Lamellen (52) und/oder die zweiten Lamellen (62) mit intumeszierendem Material ausgebildet sind.

4. Leitungsdurchführung nach einem der Ansprüche 1 bis 3, wobei zumindest die ersten und die zweiten Lamellen (52, 62) aus einem flexiblen bzw. elastischen Material ausgebildet sind.

5. Leitungsdurchführung nach einem der Ansprüche 1 bis 4, wobei die ersten und die zweiten Lamellen (52, 62) jeweils Längen aufweisen, so dass diese in keinem Bereich außer Eingriff gelangt sind, wenn aufgrund einer Verschiebung des ersten Basisteils quer zur axialen Erstreckungsrichtung (A) die ersten Lamellen (52) an das zweite Basisteil (61) anstoßen oder die zweiten Lamellen (62) an das erste Basisteil (51) anstoßen.

6. Leitungsdurchführung nach Anspruch 5, wobei bei kreisförmigen Querschnitten des ersten und des zweiten Basisteils (61) die Längen der ersten und der zweiten Lamellen (52, 62) jeweils über 50% des Abstands zwischen dem ersten und zweiten Basisteil (51, 61) betragen.

7. Leitungsdurchführung nach einem der Ansprüche 1 bis 4, wobei die ersten und die zweiten Lamellen (52, 62) jeweils Längen aufweisen, so dass diese sich in jeder möglichen Richtung quer zur axialen Richtung (A) der Leitungsöffnung (53) mindestens mit einer Länge überlappen, die größer ist als der kleinere Abstand aus dem minimalen Abstand zwischen einem Ende der ersten Lamellen (52) und dem zweiten Basisteil (61) und dem minimalen Abstand zwischen einem Ende der zweiten Lamellen (62) und dem ersten Basisteil (51).

8. Leitungsdurchführung nach einem der Ansprüche 1 bis 7, wobei eine Leitung (3) vorgesehen ist, wobei die Leitungsöffnung (53) an ihrer inneren Mantelfläche mit einer Gleiteinrichtung (7) versehen ist, so dass die Leitung (3) durch die Leitungsöffnung (53) gleitend und gasdicht geführt ist.

9. Leitungsdurchführung nach Anspruch 8, wobei die Gleitreinrichtung (6) eine Gleitfilmwicklung und/oder ein Gleitmittel aufweist.

10. Leitungsdurchführung nach einem der Ansprüche 1 bis 7, wobei eine Leitung (3) vorgesehen ist, wobei die Leitung (3) in der Leitungsöffnung (53) fixiert ist.

11. Leitungsdurchführung nach einem der Ansprüche 1 bis 10, wobei das erste und das zweite Lamellenelement (5, 6) vollständig entlang der axialen Richtung der Leitungsöffnung (53) geschlitzt ist.

12. Leitungsdurchführungsanordnung, umfassend:
- ein Bauteil (1) mit einer Durchgangsöffnung (2);
- eine Leitungsdurchführung nach einem der Ansprüche 1 bis 10, wobei das zweite Basisteil (6) in der Durchgangsöffnung (2) fixiert ist.

## Claims

1. A line penetration for routing a line (3) through a building part (1), especially a wall or a ceiling of a building, comprising:
- a first lamellar element (5) with a hollow-cylindrical first base part (51) for receiving the line (3) in a straight-through line opening (53), and with first circumferential lamellas (52), which extend outwardly transverse to an axial direction of the first base part (51);
- a second lamellar element (6) with a hollow-cylindrical second base part (61) for arrangement in a passage opening of the building part (1), and with second circumferential lamellas (62), which extend inwardly transverse to an axial direction (A) of the line opening (53),
wherein the first and second lamellas (52, 62) mesh with one another in the manner of a comb, so that the side faces of the lamellas (52, 62) are impermeable to gas and bear slidingly on one another.

2. A line penetration according to claim 1, wherein the first and/or the second lamellas (52, 62) have a rectangular cross section and in particular are disposed with surfaces parallel to one another.

3. A line penetration according to one of claims 1 to 2, wherein the first base part (51) and/or the first lamellas (52) and/or the second lamellas (62) are formed with intumescent material.

4. A line penetration according to one of claims 1 to 3, wherein at least the first and the second lamellas (52, 62) are formed from a flexible or elastic material.

5. A line penetration according to one of claims 1 to 4, wherein the first and the second lamellas (52, 62) respectively have lengths such that they do not become disengaged in any region if the first lamellas (52) bump into the second base part (61) or the second lamellas (62) bump into the first base part (51) due to displacement of the first base part transverse to the direction of axial extent (A).

6. A line penetration according to claim 5, wherein, in the case of circular cross sections of the first and second base parts (61), the lengths of the first and second lamellas (52, 62) are respectively greater than 50% of the spacing between the first and second base parts (51, 61).

7. A line penetration according to one of claims 1 to 4, wherein the first and second lamellas (52, 62) respectively have lengths such that they overlap in every possible direction transverse to the axial direction (A) of the line opening (53), at least over a length greater than the smaller of the spacings among the minimum spacing between one end of the first lamellas (52) and the second base part (61) and the minimum spacing between one end of the second lamellas (62) and the first base part (51).

8. A line penetration according to one of claims 1 to 7, wherein a line (3) is provided, wherein the line opening (53) is equipped on its inside shell surface with a sliding device (7), so that the line (3) is guided slidingly and gas-tightly through the line opening (53).

9. A line penetration according to claim 8, wherein the sliding device (6) has a coil of sliding film and/or a lubricant.

10. A line penetration according to one of claims 1 to 7, wherein a line (3) is provided, wherein the line (3) is fixed in the line opening (53).

11. A line penetration according to one of claims 1 to 10, wherein the first and the second lamellar elements (5, 6) are slit completely along the axial direction of the line opening (53).

12. A line-penetration arrangement, comprising:
- a building part (1) with a passage opening (2);
- a line penetration according to one of claims 1 to 10, wherein the second base part (6) is fixed in the passage opening (2).

## Revendications

1. Passage de conduite destiné à faire passer une conduite (3) à travers un élément de construction (1), en particulier un mur ou un plafond d'un bâtiment, comportant :
- un premier élément à lamelles (5) ayant une première partie de base cylindrique creuse (51) pour recevoir la conduite (3) dans un orifice de conduite continu (53), et des premières lamelles circonférentielles (52) qui s'étendent vers l'extérieur transversalement à une direction axiale de la première partie de base (51),
- un second élément à lamelles (6) ayant une seconde partie de base cylindrique creuse (61) pour l'agencement dans un orifice de passage de l'élément de construction (1), et des secondes lamelles circonférentielles (62) qui s'étendent vers l'intérieur transversalement à une direction axiale (A) de l'orifice de conduite (53),
dans lequel les premières et secondes lamelles (52, 62) s'imbriquent les unes dans les autres à la manière d'un peigne, de sorte que les surfaces latérales des lamelles (52, 62) sont en contact les unes avec les autres de manière imperméable aux gaz et glissante.

2. Passage de conduite selon la revendication 1, dans lequel les premières et/ou les secondes lamelles (52, 62) ont une section transversale rectangulaire et sont en particulier agencées avec leurs surfaces mutuellement parallèles.

3. Passage de conduite selon l'une des revendications 1 à 2, dans lequel la première partie de base (51) et/ou les premières lamelles (52) et/ou les secondes lamelles (62) sont formées avec un matériau intumescent.

4. Passage de conduite selon l'une des revendications 1 à 3, dans lequel au moins les premières et les secondes lamelles (52, 62) sont formées à partir d'un matériau souple ou élastique.

5. Passage de conduite selon l'une des revendications 1 à 4, dans lequel les premières et les secondes lamelles (52, 62) ont respectivement des longueurs, de telle sorte que celles-ci ne peuvent être mises hors de prise dans aucune zone lorsque, suite à un déplacement de la première partie de base transversalement à la direction d'extension axiale (A), les premières lamelles (52) viennent en butée contre la seconde partie de base (61) ou que les secondes lamelles (62) viennent en butée contre la première partie de base (51) .

6. Passage de conduite selon la revendication 5, dans lequel lorsque les première et seconde parties de base (61) ont des sections transversales circulaires, les longueurs des premières et secondes lamelles (52, 62) sont respectivement égales à plus de 50 % de la distance entre les première et seconde parties de base (51, 61) .

7. Passage de conduite selon l'une des revendications 1 à 4, dans lequel les premières et les secondes lamelles (52, 62) ont respectivement des longueurs, de telle sorte que celles-ci se chevauchent dans chaque direction possible transversalement à la direction axiale (A) de l'orifice de conduite (53) au moins avec une longueur qui est supérieure à la plus petite distance entre la distance minimale entre une extrémité des premières lamelles (52) et la seconde partie de base (61) et la distance minimale entre une extrémité des secondes lamelles (62) et la première partie de base (51).

8. Passage de conduite selon l'une des revendications 1 à 7, dans lequel une conduite (3) est prévue, dans lequel l'orifice de conduite (53) est pourvue d'un dispositif de glissement (7) sur sa surface d'enveloppe intérieure, de sorte que la conduite (3) est guidée à travers l'orifice de conduite (53) de manière glissante et imperméable aux gaz.

9. Passage de conduite selon la revendication 8, dans lequel le dispositif de glissement (7) comporte un enroulement de film lubrifiant et/ou des moyens de glissement.

10. Passage de conduite selon l'une des revendications 1 à 7, dans lequel une conduite (3) est prévue, dans lequel la conduite (3) est fixée dans l'orifice de conduite (53).

11. Passage de conduite selon l'une des revendications 1 à 10, dans lequel les premier et second éléments à lamelles (5, 6) sont entièrement fendus le long de la direction axiale de l'orifice de conduite (53).

12. Système de passage de conduite comportant :
- un élément de construction (1) avec un orifice de passage (2) ;
- un passage de conduite selon l'une des revendications 1 à 10, dans lequel la seconde partie de base (6) est fixée dans l'orifice de passage (2).
